(19) Europäisches Patentamt

European Patent Office

Office européen des brevets

(11) **EP 1 724 567 A1**

(12) **EUROPEAN PATENT APPLICATION**

(43) Date of publication:
**22.11.2006 Bulletin 2006/47**

(51) Int Cl.:
*G01N 21/35* (2006.01)        *G01N 21/61* (2006.01)
*C23C 8/06* (2006.01)

(21) Application number: **06009924.9**

(22) Date of filing: **15.05.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **17.05.2005 US 681492 P**

(71) Applicant: **NITREX METAL INC**
**St Laurent (Quebec) H4R 2J5 (CA)**

(72) Inventors:
• **Koshel, Dimitri**
**Longueuil, Quebec**
**J4K 2Y8 (CA)**

• **Korwin, Michel J.**
**Westmount, Quebec**
**H3Z 2L4 (CA)**

(74) Representative: **Lempert, Jost**
**Patentanwälte,**
**Dipl.-Ing. Heiner Lichti**
**Dipl.-Phys. Dr. rer. nat. Jost Lempert,**
**Dipl.-Ing.Hartmut Lasch,**
**Postfach 41 07 60**
**D-76207 Karlsruhe (DE)**

(54) **Apparatus and method for controlling atmospheres in heat treating of metals**

(57)     The present invention relates to an absorption gas analyzer for measuring a concentration of at least a component gas in a sample gas. The absorption gas analyzer comprises a main absorption cell (102) for containing the sample gas for measurement therein. At least a narrow band emitter (108) emits electromagnetic radiation in at least a predetermined narrow wavelength band which is transmitted through the main absorption cell (102). A reflecting device (110) is disposed for reflecting the electromagnetic radiation after transmission through the main absorption cell (102) such that the electromagnetic radiation is transmitted again therethrough. At least a detector (112) detect the electromagnetic radiation and provide at least an intensity signal in dependence upon the concentration of the at least a component gas. The absorption gas analyzer enables simultaneous determination of concentration of a plurality of individual component gases with a high level of accuracy.

Fig. 3a.

EP 1 724 567 A1

## Description

This application claims benefit from United States Provisional Patent Application No. 60/681,492 filed May 17,2005, the entire contents of which is incorporated herein by reference.

## Field of the Invention

This invention relates generally to controlling of atmospheres in heat treating of metals and in particular to an absorption gas analyzer for measuring component gas concentrations and method for controlling atmospheres in heat treating of metals.

## Background of the Invention

Heat treating of metal is a commonly used technique to improve material characteristics of a workpiece for specific applications. Typical heat treating processes are annealing, carburizing, nitriding, oxynitriding, nitrocarburizing, carbonitriding and post oxidation. Application of such processes enhances wear resistance, corrosion resistance, and fatigue strength of such treated workpieces.

However, in order to reproducibly obtain predetermined results in heat treating processes, accurate control of the heat treating atmosphere composition during the heat treating process is of critical importance. In general, heat treating processes are very complex processes influenced by thermodynamic relations at the gas/metal interface during breakup of the atmosphere's components. The exact nature of the reactions taking place, i.e. mass transport of the gaseous phase, adsorption, diffusion and phase formation is determined by the kinetics of each individual heat treating process. Therefore, in order to reproducibly obtain predetermined results in heat treating processes, accurate control of the provision of the component gases of the heat treating atmosphere during the heat treating process is of critical importance. To control the provision of the component gases, the concentration of the component gases of the heat treating atmosphere need to be measured, for example, in predetermined intervals, during the heat treating process.

Currently used sensors for measuring concentrations of component gases are Oxygen Probe (Q Probe), Modified Oxygen Probe (QE Probe), and a combination of a Hydrogen sensor with an Oxygen Probe. Unfortunately, these sensors produce a signal, which is dependent on the concentration of several component gases. The determination of the concentration of individual component gases requires the use of two or more devices and of algorithms for calculating the same. This leads to considerable errors, diminishing the effectiveness of the atmosphere control.

Absorption gas analyzers as disclosed, for example, in US Patent 6,710,347 issued to Eden on March 23, 2004 produce a signal that is dependent on the concentration of an individual component gas. The absorption gas analyzer comprises a radiation source and a filter for providing electromagnetic radiation in a pre-selected spectral band having at least one absorption line of the component gas and an optical detector for detecting the radiation after passing through a gas cell containing a sample gas and a component gas cell containing the component gas whose concentration is to be determined. The concentration of the component gas is then determined in dependence upon the detected radiation. While Eden's device overcomes a drawback of the prior art by providing a device without moving parts, i.e. the component gas cell is permanently present, it has numerous disadvantages for use in determining component gas concentrations in heat treating. The use of an optical filter for narrowing the bandwidth of the emitted radiation causes substantial transmission loss and substantially increases cost. Further, the transmission characteristics of such filters match only approximately the needs for an absorption gas analyzer, thus, the target signal needs to be subtracted from background by referencing direct transmitted radiation to radiation that has passed through an additional component gas cell. However, this technique narrows the dynamic range of measurements, for example, in case of strong interfering absorption in the gas cell. Furthermore, measurement of high concentrations of a component gas is difficult due to the exponential character of the Beer-Lambert law. Therefore, the design of Eden's device likely requires changing of the concentration of a component gas in the component gas cell or changing the optical path length therethrough for measurements in low and higher concentration ranges of the component gas. Finally, simultaneous measurement of the concentration of a plurality of component gases is difficult, if not impossible, to implement using Eden's device.

A standard of the art gas analyzer is manufactured by Siemens and sold as ULTRAMAT 6 for gas concentration measurements in industrial applications. Infrared (IR) radiation emitted from a heated IR wide range source is divided into two equal beams — sample beam and reference beam - using a beam divider, which also acts as a filter. The reference beam passes through a reference cell filled with a non-infrared-active gas such as Nitrogen and reaches a right hand side of a detector. The sample beam passes through a sample cell and reaches the left hand side of the detector after being attenuated through absorption in the sample cell. The detector is of a double layer design and disposed in an upper and lower receiver cell. The detector is designed for ensuring a narrow band spectral sensitivity. The center of the absorption band of the component gas is absorbed in the upper detector layer while the edges of the band are absorbed to approximately a same extent in the upper and lower layers. The upper and lower layers are connected via a micro-flow sensor. An optical coupler lengthens the lower receiver cell optically enabling varying of the infrared absorption in the lower detector layer to minimize the influence of interfering components. A chopper rotates between the beam divider and the gas cells interrupting the two beams alternately and periodically. If absorption takes place a pulsating current is generated which is converted by the micro-flow sensor into an electrical signal. The ULTRAMAT 6 has numerous disadvantages. The heated IR wide range source is difficult to control due to stability problems, has high power consumption, and has a substantially limited lifetime. The use of a micro-flow sensor causes substantial problems with respect to thermal stability especially for operation at higher temperatures as is the case in heat treating. The employment of IR filters, IR beam dividers, and IR optical couplers substantially increases the manufacturing cost of the device. Finally, the device comprises a highly complicated optical path and detector design and, further, requires employment of mechanically moving parts. These factors increase the manufacturing cost and, more significantly, cause substantial problems with regard to optical and mechanical stability of the device during operation.

Therefore it would be advantageous to provide an absorption gas analyzer that overcomes some or all of the drawbacks of the prior art.

**Summary of the Invention**

It is, therefore, an object of the invention to provide an absorption gas analyzer for determining concentration of individual components of a gas atmosphere having a high level of accuracy within a wide range of component gas concentrations.

It is further an object of the invention to provide an absorption gas analyzer that is operating in an optical and mechanical stable fashion, is of compact and relative simple design, and can be manufactured at relative low cost.

It is yet further an object of the invention to provide an absorption gas analyzer that is capable of simultaneously measuring concentration of a plurality of component gases in a single device.

It is yet further an object of the invention to provide a method for controlling atmospheres in heat treating employing an absorption gas analyzer.

In accordance with the present invention there is provided an absorption gas analyzer for measuring a concentration of at least a component gas in a sample gas comprising:

a main absorption cell for containing the sample gas at a predetermined temperature and a predetermined pressure for measurement therein;
at least a narrow band emitter for emitting electromagnetic radiation in at least a predetermined narrow wavelength band, the predetermined narrow wavelength band being within a wavelength range of a predetermined absorption band of each of the at least a component gas, the electromagnetic radiation for being transmitted through the main absorption cell;
a reflecting device disposed for reflecting the electromagnetic radiation after transmission through the main absorption cell such that the electromagnetic radiation is transmitted again therethrough; and,
at least a detector for detecting the electromagnetic radiation after the second transmission through the main absorption cell and for providing at least an intensity signal in dependence upon the concentration of the at least a component gas.

In accordance with an aspect of the present invention there is provided an absorption gas analyzer for measuring a concentration of at least a component gas in a sample gas comprising:

a main absorption cell for containing the sample gas at a predetermined temperature and a predetermined pressure for measurement therein;
at least a narrow band emitter for emitting electromagnetic radiation in at least a predetermined narrow wavelength band, the predetermined narrow wavelength band being within a wavelength range of a predetermined absorption band of each of the at least a component gas, the electromagnetic radiation for being transmitted through the main absorption cell;
a reflecting device disposed for reflecting the electromagnetic radiation after transmission through the main absorption cell such that the electromagnetic radiation is transmitted again therethrough, the reflecting device having one of spherical and parabolic concave shape; and, at least a detector for detecting the electromagnetic radiation after the second transmission through the main absorption cell and for providing at least an intensity signal in dependence upon the concentration of the at least a component gas, the at least a detector being placed at a predetermined distance from the reflecting device with the predetermined distance including a predetermined defocusing distance.

In accordance with another aspect of the present invention there is provided an absorption gas analyzer for measuring a concentration of at least a component gas in a sample gas comprising:

a main absorption cell for containing the sample gas at a predetermined temperature and a predetermined pressure for measurement therein;

at least a narrow band emitter for emitting electromagnetic radiation in at least a predetermined narrow wavelength band, the predetermined narrow wavelength band being within a wavelength range of a predetermined absorption band of the at least a component gas, the electromagnetic radiation for being transmitted through the main absorption cell;

an interfering gas cell containing an interfering gas comprising an absorption band which is partially overlapping the wavelength band of one of the at least a narrow band emitter, the interfering gas cell interposed between at least the one of the at least an emitter and the main absorption cell;

a reflecting device disposed for reflecting the electromagnetic radiation after transmission through the main absorption cell such that the electromagnetic radiation is transmitted again therethrough; and,

at least a detector for detecting the electromagnetic radiation after the second transmission through the main absorption cell and for providing at least an intensity signal in dependence upon the concentration of the at least a component gas.

In accordance with the present invention there is further provided a method for measuring a concentration of at least a component gas in a sample gas representative of an atmosphere in a processing apparatus comprising:

a) providing in a main absorption cell the sample gas at a predetermined temperature and a predetermined pressure for measurement therein;

b) transmitting electromagnetic radiation through the main absorption cell, the electromagnetic radiation being emitted from at least a narrow band emitter in at least a predetermined narrow wavelength band within a wavelength range of a predetermined absorption band of the at least a component gas;

c) reflecting the electromagnetic radiation;

d) transmitting the reflected electromagnetic radiation through the main absorption cell; and,

e) detecting the electromagnetic radiation after the second transmission through the main absorption cell and providing at least an intensity signal in dependence upon the concentration of the at least a component gas.

## Brief Description of the Figures

Exemplary embodiments of the invention will now be described in conjunction with the following drawings, in which:

Figure 1a is a simplified block diagram schematically illustrating a first embodiment of an absorption gas analyzer according to the present invention;

Figure 1b is a simplified block diagram schematically illustrating a preferred embodiment of a main absorption cell of the absorption gas analyzer according to the present invention;

Figure 2 is a diagram illustrating the exponential relation between absorbance and measured intensity for determining concentration of a component gas in the absorption gas analyzer shown in Fig. 1;

Figures 3a, 3b and 4 are a simplified block diagrams schematically illustrating two embodiments of an absorption gas analyzer according to the present invention;

Figure 5a is a simplified diagram illustrating placement of a detector at a defocusing distance according to the present invention;

Figures 5b to 5e, 6, 7a and 7b are simplified block diagrams schematically illustrating various embodiments of an absorption gas analyzer according to the present invention;

Figures 8-10 are simplified flow diagrams schematically illustrating various embodiments of a method for determining a concentration of at least a component gas according to the invention;

Figure 11 is a simplified block diagram schematically illustrating a system for controlling composition of a processing atmosphere according to the present invention; and,

Figure 12 is a simplified flow diagram schematically illustrating a method for controlling composition of a processing atmosphere according to the present invention.

## Detailed Description of the Invention

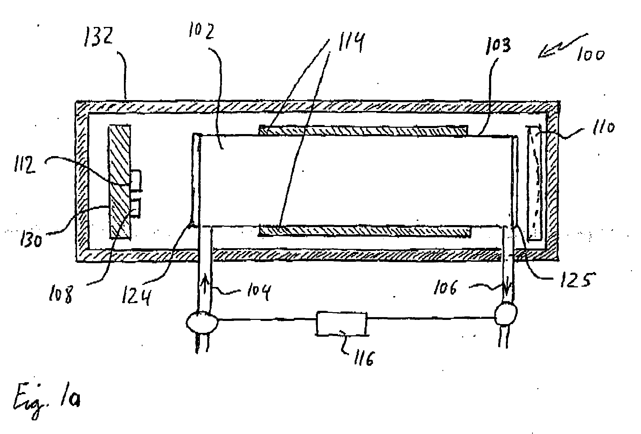

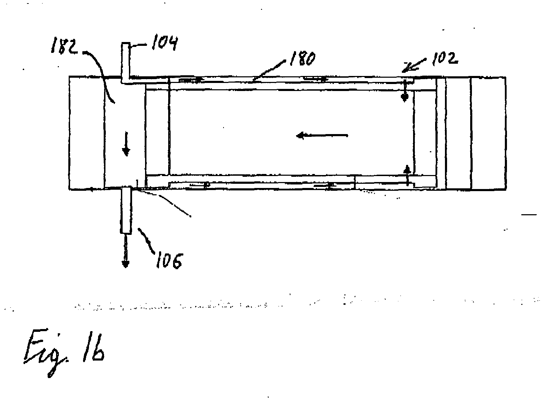

In the following description of the various embodiments same reference numerals will be used for same components. Referring to Fig. 1a, a first embodiment of an absorption gas analyzer 100 for determining a concentration of at least a component gas according to the invention is shown. The absorption gas analyzer 100 comprises a main absorption cell 102 for containing a sample gas during measurement therein. The main absorption cell 102 comprises a body 103 of hollow elongated shape such as a cylinder, made of a material that is substantially chemically resistant to the sample gas having at a first end a transparent window 124 and at a second end a transparent window 125 attached thereto in a gas tight fashion, with the windows 124 and 125 being also made of a chemically resistant material. For example, it is well known in the art that quartz glass is chemically resistant with respect to a wide variety of gases and gas compositions. The sample gas is provided through inlet 104 and exhausted through outlet 106, the inlet 104 and the outlet 106 being in fluid communication with the main absorption cell 102. Electromagnetic radiation, provided from an electromagnetic radiation source 108, is transmitted through the main absorption cell 102, reflected at mirror 110, and transmitted again through the main absorption cell 102 onto a detector 112, chosen to be sensitive in at least the same wavelength band. Referring to Fig. 1b, a preferred embodiment of the main absorption cell 102 according to the invention is shown. In order to provide a compact design and to simplify manufacturing, the gas inlet 104 and the gas outlet 106 are disposed at a same first end of the main absorption cell 102. The gas inlet 104 is connected to a cylindrical laminator 180 disposed inside the main absorption cell 102 comprising a spiraling conduit disposed between the first end of the main absorption cell 102 and a second opposite end of the main absorption cell 102. Preferably, the laminator 180 is made of Teflon ®. At the second end the sample gas is then provided into the main absorption cell 102, preferably, through openings in the conduit disposed, for example, in a ring shaped fashion. Exhaust sample gas is collected using connector ring 182 disposed at the first end and connected to the gas outlet 106.

Preferably, the electromagnetic radiation is emitted from a narrow band emitter 108 absent a filter and is of narrow band width - between approximately 1 and 150 nm - in the wavelength range between ultraviolet (UV) and far infrared (FIR) and chosen to be within a wavelength range of a predetermined absorption band of the at least a component gas. For determining concentrations of component gases in heat treating atmospheres, the wavelength range between near infrared (NIR) and FIR is preferred, since most component gases have at least an absorption band in this wavelength range. Depending on the component gas to be determined the emitter 108 is, preferably, selected from one of a Light Emitting Diode (LED) and Laser Diode due to their compactness and robustness. For example, a suitable laser diode is a Vertical Cavity Surface Emitting Laser (VCSEL).

The following example illustrates the determination of the concentration of ammonia in a sample gas. For NIR radiation through a sample gas comprising ammonia the ratio of the transmitted intensity $I_t$ to the initial intensity $I_0$ at a given wavelength is related exponentially - Beer-Lambert law - to transition line strength $S_1(cm^{-2}atm^{-1})$, line-shape function $f(cm)$, total pressure $P(atm)$, mole fraction of the ammonia x, and path length $L(cm)$:

$$I_t / I_0 = \exp(- S_l fPxL)$$

Generally, $I_t/I_0$ is converted to absorbance a and related to the transition parameters:

$$a = -\ln(I_t / I_0) = S_l fPxL$$

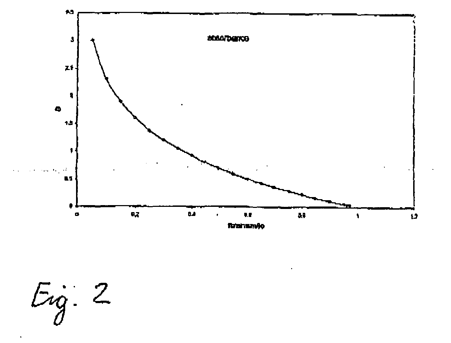

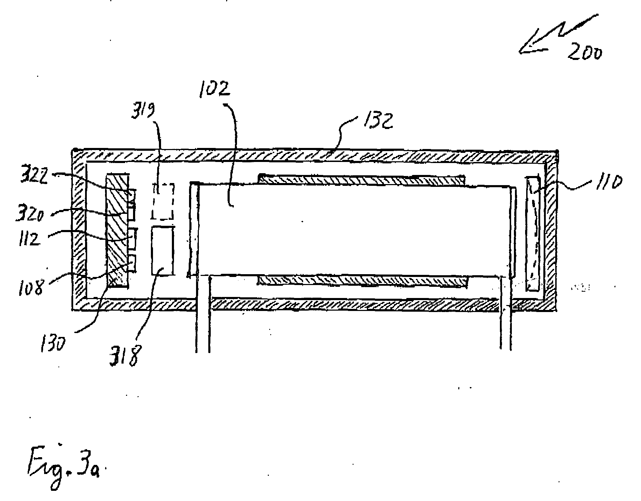

as shown in the diagram of Fig. 2. With the transition line strength being temperature dependent, the absorbance is, therefore, dependent upon the temperature and the pressure of the sample gas, the concentration of ammonia and the path length of the radiation within the sample gas. In short, by providing the sample gas at a predetermined temperature and pressure, and knowing the path length, i.e. twice the length of the main absorption cell 102, it is possible to determine the concentration of ammonia in the sample gas by measuring the intensity of the transmitted intensity $I_t$ at the detector 112. As is evident, determination of the concentration of other component gases is performed in a similar fashion. In order to ensure a predetermined temperature of the sample gas, a main absorption cell temperature control device 114 is provided, preferably, surrounding a substantial portion of an outside surface of the body 103 of the main absorption cell 102. The sample gas provision and its pressure is regulated, for example, using a pressure control device 116 in communication with at least one of the inlet 104 and the outlet 106.

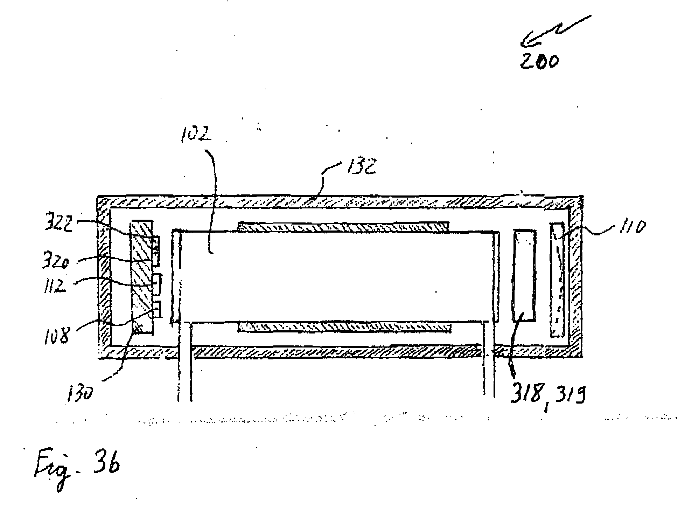

Referring to Fig. 3a, a second embodiment of an absorption gas analyzer 200 for determining a concentration of at least a component gas according to the invention is shown. As is evident to those of skill in the art, there are situations where the sample gas comprises an interfering gas, i.e. a gas other than the component gas that has an absorption band partially overlapping with the wavelength band of the emitted electromagnetic radiation. Such a situation is more likely when a LED is used as emitter 108, since LEDs emit electromagnetic radiation having a wider bandwidth then Laser Diodes. In order to enable reliable determination of the concentration of the component gas in presence of the interfering gas, an interfering gas cell 318 filled with the interfering gas is interposed between the emitter 108 and the main absorption cell 102 and between the main absorption cell 102 and the detector 112. The interfering gas cell acts as a selective filter substantially filtering the wavelength components absorbed by the interfering gas. Therefore, the intensity detected by the detector 112 - after calibration with only non absorbent gas present in the main absorption cell 102 - is again substantially related to the concentration of the component gas in the main absorption cell 102. In order to increase the accuracy, a second emitter 320 and a second detector 322 are disposed such that the radiation emitted from the second emitter 320 is transmitted through the main absorption cell 102, reflected at the mirror 110 and transmitted again through the main absorption cell 102 onto the second detector 322 without passing through the interfering gas cell 318. The electromagnetic radiation emitted from the second emitter 320 comprises a wavelength band outside any expected absorption band of the sample gas. Obviously, the second detector 322 is chosen to be sensitive in the same wavelength band. Superposition of the signals detected by the detectors 112 and 322 enables separation of the intensity signal related to the concentration of the component gas. Optionally, a component gas cell 319 filled with the component gas is interposed between the second emitter 320 and the main absorption cell 102 and between the main absorption cell 102 and the second detector 322. Again, superposition of the signals detected by the detectors 112 and 322 enables separation of the intensity signal related to the concentration of the component gas. Further optionally, the interfering gas cell 318 contains a plurality of interfering gases, provided chemical stability is ensured. Using an interfering gas cell 318 is highly advantageous in situations where possible interfering gases are known by enabling direct and accurate determination of the concentration of a component gas from the intensities sensed by the detectors 112 and 322. In numerous industrial processes such as in heat treating of metals the component gases as well as interfering gases are known. For example, water vapour as an interfering gas comprises an absorption band that is partially overlapping with one of the absorption bands of ammonia. Yet further optionally, the interfering gas cell 318 is disposed between the main absorption cell 102 and the mirror 110, as shown in Fig. 3b. For example, if the interfering gas cell 318 comprises water vapour as interfering gas, it is advantageous to place the interfering gas cell 318 away from the cooled emitter/detector side — as will be described below — in order to prevent condensation effects in the interfering gas cell 318. Of course, it is also possible to place the component gas cell 319 between the main absorption cell 102 and the mirror 110. Furthermore, it is possible to place one cell, for example, the component gas cell 319 in front of the main absorption cell 102, as shown in Fig. 3a, while the interfering gas cell 318 is disposed between the main absorption cell 102 and the mirror 110, as shown in Fig. 3b.

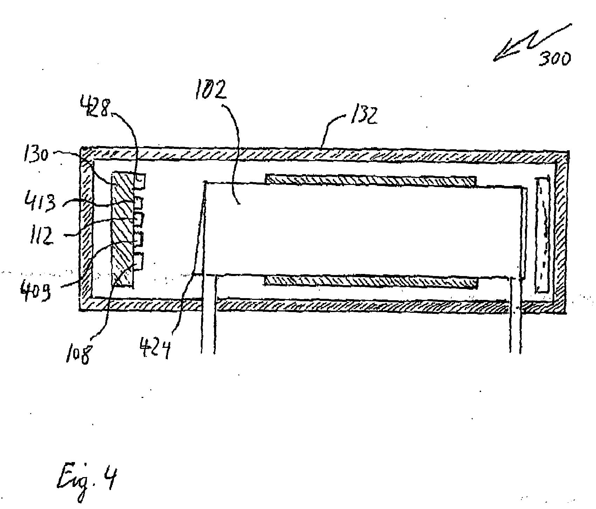

Some error sources affecting the accuracy of the concentration measurements in an absorption gas analyzer are emitter instability in amplitude and wavelength, detector instability, and a shift in the absorption characteristics of the main absorption cell 102. Referring to Fig. 4, a third embodiment of an absorption gas analyzer 300 for determining a concentration of at least a component gas according to the invention is shown. Here, the main absorption cell 102 is provided with a window 424 having a sloped surface on its detector facing side for deviating primary backscattered radiation - window reflection — from the detectors, thus increasing accuracy. Furthermore, sensing the radiation reflected from the window 424 using primary reference detector 428 enables detection of the initial intensity of the emitted radiation of the emitter 108. For example, the signal provided by the primary reference detector 428 is used in a feedback loop for controlling the initial intensity of the emitter 108. Preferably, the primary reference detector 428 is optically coupled to the emitter 112 using an optical waveguide, for example, a light guide made of suitable plastic material. Radiation losses in the light guide provide sufficient attenuation to prevent saturation of the reference detector 428. The absorption gas analyzer 300 further comprises a reference emitter 409 for emitting electromagnetic radiation in a wavelength band outside any expected absorption band of the sample gas. The emitted radiation is transmitted through the main absorption cell 102, reflected at the mirror 110 and transmitted again through the main absorption cell 102 onto the reference detector 413. The intensity signal sensed by the reference detector 413 senses intensity changes due to a shift in the absorption characteristics of the main absorption cell 102 is used to correct the measurement intensity signal provided by the detector 108 during signal processing. Optionally, the reference detector 413 is omitted and the detector 112 is also used for sensing the reference intensity signal. This is possible if the detector 112 is sensitive in both wavelength bands and the emitters 108 and 409 are pulsed emitters for emitting the electromagnetic pulses in a time shifted fashion. This reference setup is highly beneficial for industrial applications such as heat treating by enabling correction of the measurement signal for intensity changes caused by dust deposition and vapour condensation in the main absorption cell, as well as slight geometrical changes of the device due to temperature changes and vibrations during operation. It is noted, that this reference setup is also functioning in case the interfering gas cell 318 is interposed between the reference emitter 409, the main absorption cell 102, and the reference detector 413. Optionally, the interfering gas cell comprises a window having a sloped surface on its detector facing side.

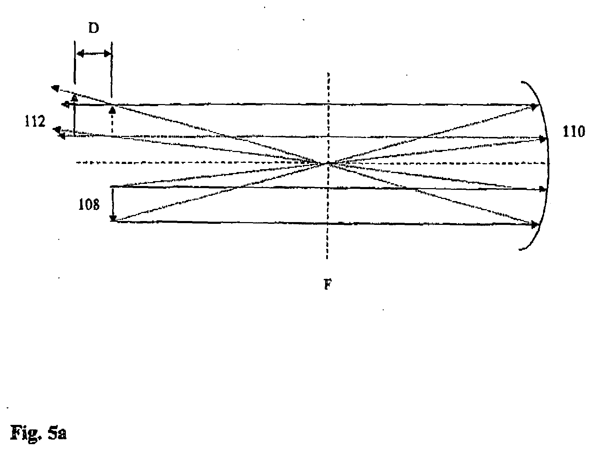

Using a reflective setup with beam focusing - mirror 110 — substantially increases the optical path length through the sample gas — twice the length of the main absorption cell - enabling a compact design, as well as a substantially increased intensity difference between the transmitted signal and the initial signal allowing component gas concentration measurements with a high level of accuracy while providing at a same time a very compact design suitable for numerous industrial applications. The use of narrow band emitters such as LEDs and Laser Diodes provides sufficient signal intensity allowing the detectors to be placed out of focus of the mirror 110. For example, using emitters and detectors having a physical dimension of approximately 10 mm diameter and a spherical mirror having a focus length of f = 100 mm, the detectors are placed at a distance of 220 mm, i.e. double the focal length plus a "defocusing distance" D, as shown in Fig. 5a. Of course, placing the detectors out of focus results in an intensity loss. However, having sufficient light intensity provided by the emitters, this design according to the invention substantially increases the opto-mechanical stability of the device and, furthermore, substantially simplifies optical adjustment procedures.

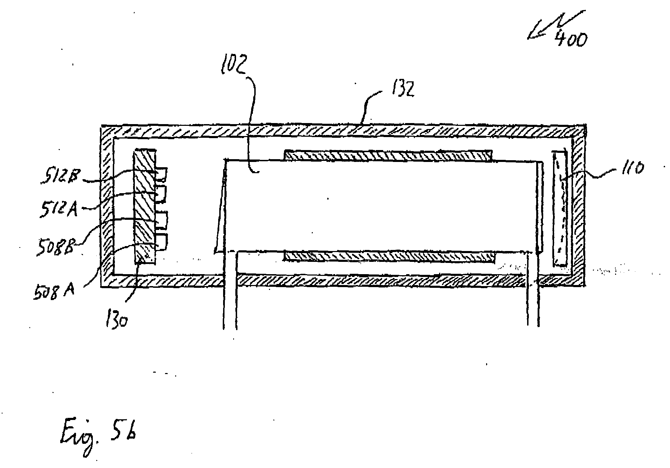

The above design also enables concentration measurement of a plurality of component gases having different absorption bands using a single absorption gas analyzer, as shown in Figs. 5b and 5c. The absorption gas analyzer 400, shown in Fig. 5b, comprises emitters 508A and 508B and detectors 512A and 512B for measuring the concentration of component gases A and B, respectively. The emitters 508A and 508B emit electromagnetic radiation in two different wavelength bands corresponding to different absorption bands of the component gases A and B. Alternatively, the absorption gas analyzer 500, shown in Fig. 5c, comprises emitters 508A and 508B and detector 112 for measuring the concentration of component gases A and B, respectively. Here, the detector 112 is sensitive in both wavelength bands of the radiation emitted by the emitters 508A and 508B and the emitters 508A and 508B are pulsed emitters for emitting the electromagnetic pulses in a time shifted fashion. Of course, the design allows employment of more than two emitters for concentration measurement of more than two component gases.

In order to ensure operational stability, the emitters as well as the detectors are, preferably, mounted onto an emitter/detector temperature control device 130. Employment of the mirror 110 locates emitters and detectors on one side facilitating the temperature control using a single control device 130. Alternatively, a plurality of temperature control devices is used for separately controlling the temperature of the various emitters and detectors. Furthermore, the compact design of the various embodiments of the absorption gas analyzer allows containment of substantially all components within a, preferably, thermally insulated housing 132 for protection against heat as well as dust, vibrations, and stray electromagnetic fields making the device highly suitable for industrial applications such as heat treating.

Preferably, the mirror 110 is shaped either as a spherical concave mirror or as a parabolic concave mirror. Alternatively, as shown in Fig. 5d, an inside surface of window 525 of the main absorption cell comprises a spherical or parabolic concave shape and is reflective with respect to the electromagnetic radiation. Further alternatively, as shown in Fig. 5e, the body 103 of the main absorption cell 102 is made of a cylinder having one spherically shaped end 527 such as a quartz test tube with the spherically shaped end being coated with a reflective material such as an Al, Ag, or Au deposition coating. Optionally, it is possible to use a flat mirror 110, in particular, when a laser diode or a short main absorption cell 102 are used, or when the component gas is a strong absorbing gas. Preferably, at least one of the windows 124 and 125 is removable attached to the body of the main absorption cell 102 to facilitate removal of dust and condensate in the main absorption cell. In order to reduce intensity losses, the electromagnetic radiation is reflected back into the main absorption cell 102 using a reflective coating on the surface of the body 103 of the main absorption cell 102 or, alternatively, the housing 132 comprises a reflective inner surface.

Obviously, the various embodiments of the absorption gas analyzer according to the invention outlined above are easily combined in various fashions in order to satisfy specific needs in different applications.

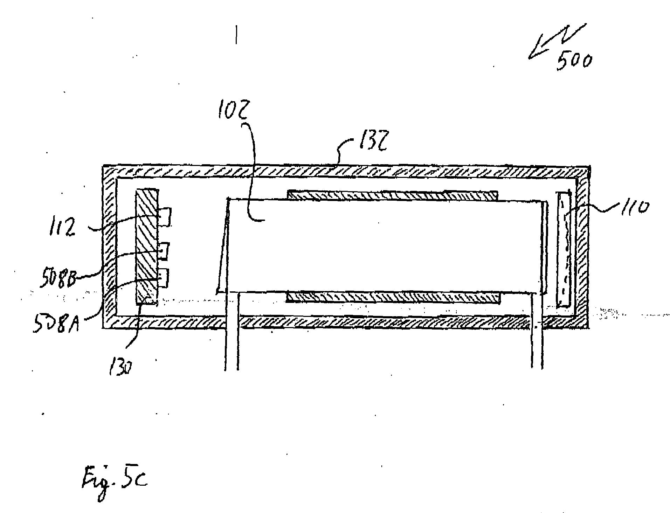

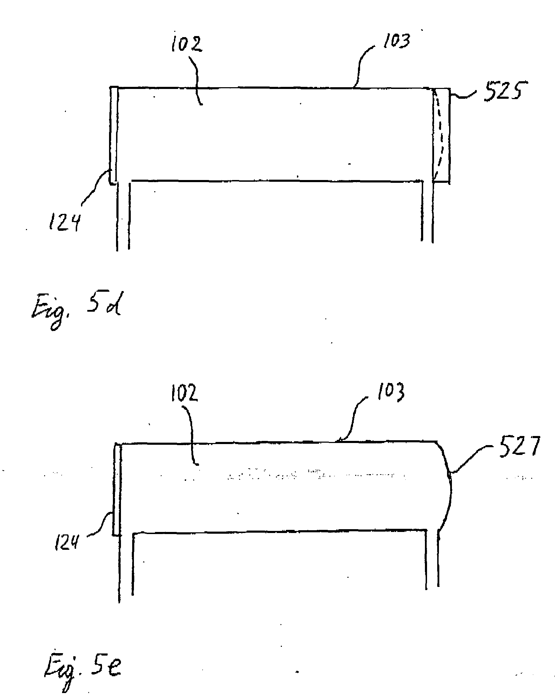

In devices such as photodiodes, LEDs, and Laser Diodes the intensity of a signal or emitted radiation is strongly connected to the operational temperature of the device. It is, therefore, desirable for measurements based on intensity changes of the transmitted electromagnetic radiation to take such temperature effects into account in order to ensure a predetermined accuracy of the measurements. In a preferred embodiment, the emitter/detector temperature control device 130 comprises a standard precision ThermoElectric Cooler (TEC) control, based on the Peltier effect. The TEC is in direct heat conducting contact with the emitters and detectors and provides an accuracy of approximately $\pm\ 0.01°C$. In an optional method temperature effects are taken into account by logging the temperature of the emitters and detectors with the detector output signal and multiplying the latter with a temperature correction coefficient" calculated from a previously measured relation between temperature and intensity. Referring to Fig. 6, a preferred general design of the gas analyzer according to the invention is shown. The main absorption cell 102 - preferably heated and insulated — is disposed inside an external housing 580. The emitters/detectors and, optionally, preamplifiers are disposed at a first end of the main absorption cell 102 inside a thermal screen block 584 and in thermal communication with a TEC 582. The TEC 582 is in thermal communication with TEC heat sink 586. Disposed in block 588 at a second opposite end of the main absorption cell 102 are a CPU module, I/O ports, and a power supply module. In this design, all heat sensitive components are disposed at one end of the main absorption cell 102 and in thermal communication with the TEC providing a compact as well as a rugged device for industrial applications such as heat treating.

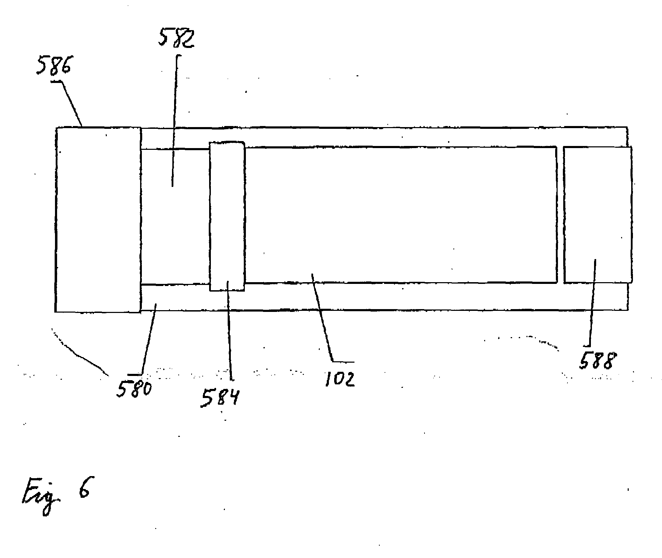

Further optionally, referring to Figs. 7a and 7b, two embodiments of the absorption gas analyzer according to the invention are shown comprising a "Constant Temperature Gradient" design for controlling the temperature of the emitters and detectors. As shown in Fig. 7a, the absorption gas analyzer according to the invention 600 comprises an external heat sink 502 having the emitter/detector temperature control device 130 mounted thereon for providing conductive heat transfer to the emitters and detectors. Optionally, an internal heat exchanger 504 is mounted to the external heat sink 502 and the emitter/detector temperature control device 130. The internal heat exchanger 504 is made of a heat conductive material and designed to surround the emitters and detectors and, optionally, the interfering gas cell 318, for providing a constant temperature environment surrounding the emitters and detectors and, optionally, the interfering gas cell. The "Constant Temperature Gradient" design uses two simple controllers, one for controlling the temperature of the heated main absorption cell 102—fixed high temperature - and the other for controlling the temperature of the external heat sink 502 - fixed low temperature. Alternatively, the analyzer 700 according to the invention has the emitters and detectors mounted on a support unit 510 disposed at a distance to the emitter/detector temperature control device 130, as shown Fig. 7b. Here the temperature of the emitter/detector control unit is kept constant using convective/ radiative heat transfer between the emitter/detector unit and the emitter/detector temperature control device 130. As is evident, a reverse process is also implementable, if necessary, having a sample gas at low temperature and instead of an external heat sink an external heat source.

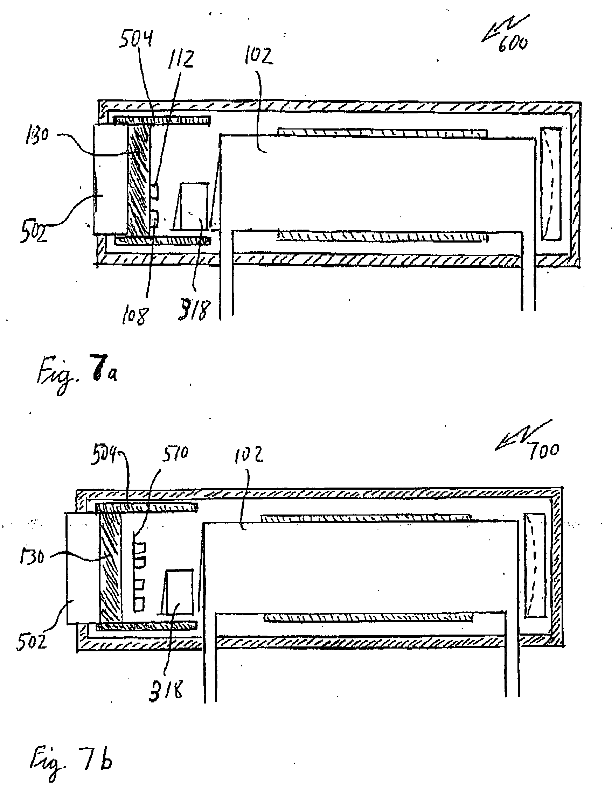

Referring to Fig. 8, a flow diagram illustrates a first embodiment of a method according to the invention for determining the concentration of a component gas using the optical absorption gas analyzer when no interfering gas is present in the sample gas. A signal S received from detector 112 is processed in measurement signal block 601 comprising amplification - box 602; optionally, integration over a predetermined period of time - box 604; optionally, processing using a low-pass or band-pass active filter - box 606; optionally, peak detection or RMS conversion-box 607; and converting into a digital signal using an A/D converter-box 608. Alternatively, block 601 comprises processing using a lock-in amplifier and A/D conversion. The digital signal is then processed—box 610—using a processor for determining a concentration x of a component gas with the digital signal corresponding to the transmitted intensity $I_t$. The initial intensity $I_0$ is obtained, for example, from an initial measurement without the component gas present in the main absorption cell. In a situation of a strong continuous signal it is possible to omit the processing in boxes 602, 604, 606, and 607 or, alternatively, amplify the signal - box 602 - but omit the processing in boxes 604, 606, and 607. Otherwise, continuous signals are processed comprising amplification - box 602; optionally, low-pass filtering - box 606; and A/D conversion - box 608. Alternatively, a pulsed emitter is used to increase the initial intensity $I_0$ of the signal. Here, the detected signal is amplified - box 602; optionally, integrated over a predetermined time interval or a predetermined number of pulses - box 604; optionally, band-pass filtered — box 606; processed for peak detection or RMS conversion — box 607; and converted into a digital signal- box 608. Optionally, the amplification - box 602 - is omitted. Further alternatively, the detector signal is amplified - box 602; then converted into a digital signal - box 608; followed by processing steps 604, 606, and 607 performed using a processor. Optionally, the processor is used to provide intensity/temperature correction by, for example, correcting a detector signal using a temperature correction coefficient and providing a control signal to the temperature control device 130.

In order to correct for a drift in the emitter intensity and in the detectors and electronic hardware an auto calibration procedure 611 is implemented. In predetermined time intervals or initiated by an operator, the main absorption cell 102 is purged - box 612 - with a non-absorbent gas, for example, nitrogen. The detected signal is processed using the above processing steps — box 614 — and converted into a digital signal — box 616 — prior provision to the processor — box 610 — for updating a calibration file.

Optionally, a primary reference signal RP received from detector 128 - reflection of initial intensity from a window having a sloped surface on its detector facing side - is processed in primary reference block 619 using the above signal processing steps - block 620 — and converted into a digital signal — box 622 — prior provision to the processor — 610 — for correcting a drift in the emitter intensity during measurements. For example, by relating the primary reference signal RP measured during calibration to the initial intensity $I_0$ it is possible to correct the initial intensity during measurements corresponding to changes in the primary reference signal RP.

Further optionally, a reference signal R received from reference detector 413 is processed in reference block 630 using the above signal processing steps - block 632 - and converted into a digital signal - box 634 -prior provision to the processor - block 610 - for correcting a shift in the absorption characteristics of the main absorption cell 102.

For example, in situations where the transition line strength $S_1(cm^{-2}atm^{-1})$ and the line-shape function $f(cm)$ are not known, a transfer function $F_{Trans}$ is determined by acquiring measured signal intensities for a plurality of different known concentrations of the component gas at a predetermined pressure and temperature. Knowing the transfer function $F_{Trans}$, the concentration x of a component gas is then determined from the ratio of transmitted intensity $I_t$ to initial intensity $I_0$:

$$x \simeq -\frac{\ln\left(I_t / I_0\right)}{F_{Trans}}$$

In predetermined time intervals the transfer function $F_{Trans}$ is re-calculated using the above procedure to adjust for optomechanical changes in the optical absorption gas analyzer.

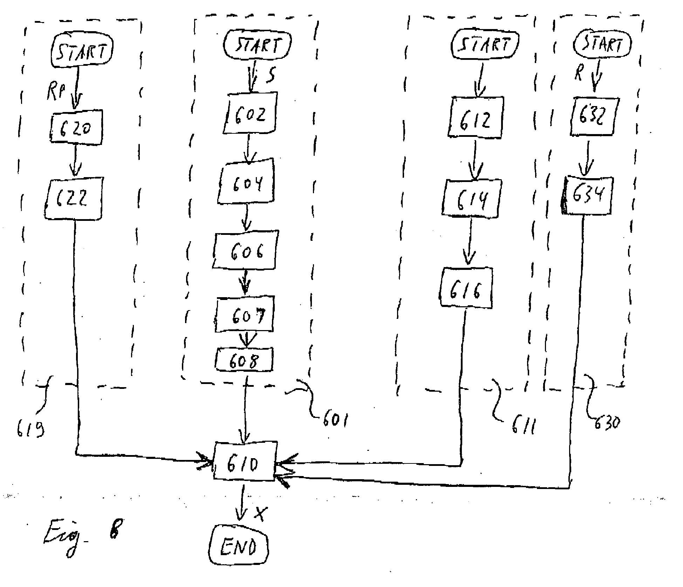

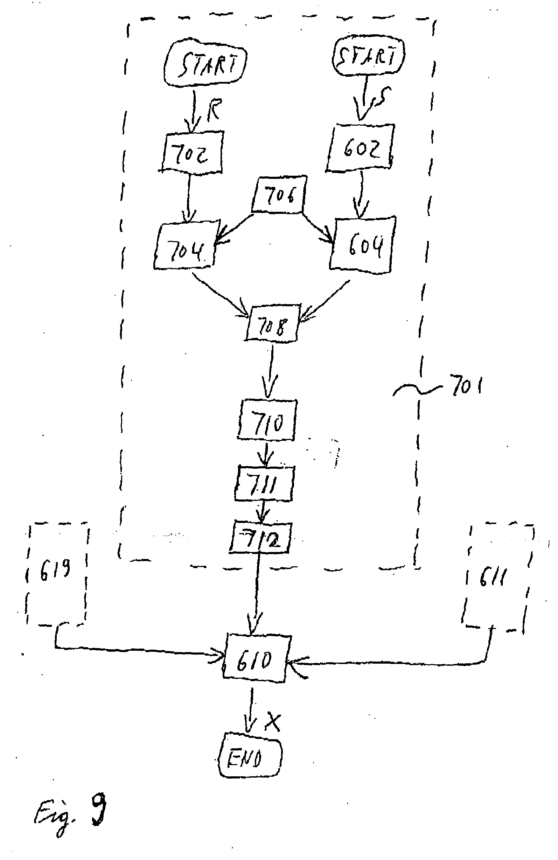

Referring to Fig. 9, a flow diagram illustrates a second embodiment of a method according to the invention for determining the concentration of a component gas using the optical absorption gas analyzer when an interfering gas is present in the sample gas. A signal S received from the detector 112 and a signal R received from the detector 322 are processed in signal processing block 701 comprising first amplification - boxes 602 and 702, respectively and, optionally, integration over a predetermined period of time - boxes 604 and 704, respectively. In order to ensure proper integration the measurement signal S and the reference signal R are synchronized - box 706. After amplification or, optionally, integration, the signal S and the signal R are superposed by providing one signal to a direct input of a differential amplifier and the other to an inverse input of the differential amplifier - box 708. The superposed signal is then, optionally, processed using a low-pass or band-pass active filter - box 710 - and, optionally, processed using peak detection or RMS conversion - box 711 - and converted into a digital signal using an A/D converter - box 712. The digital signal is then processed - box 610 - using a processor for determining a concentration x of a component gas with the digital signal corresponding to the transmitted intensity $I_t$ as outlined above. The initial intensity $I_0$ is obtained, for example, from an initial measurement without the component gas present in the main absorption cell. In a situation of strong continuous signals it is possible to omit the processing in boxes 604, 704, and 706, and optionally, in boxes 602, and 702 and provide the signals directly to the differential amplifier - box 708 as well as to omit the processing in box 710 and 711. Alternatively, pulsed emitters are used to increase the initial intensity $I_0$ of the signal. Here, the detected signal is, optionally, integrated over a predetermined time interval or a predetermined number of ptilses. Preferably, the emitters such as LEDs are operated in a Quasi-Continuous Mode (QCM). This results in a better heat stabilization due to a regular and frequent sequence of pulses and in a substantially increased signal-to-noise ratio when combined with a matched preamplifier and/or analog to digital integrating converter unit having a sufficiently slow response. Further alternatively, the detector signal is first converted into a digital signal and the processing steps 604, 704, 706, 708, 710 and 711 are performed using a processor. Of course, it is possible to implement an auto calibration procedure 611 and a primary reference block 619 in a similar fashion as illustrated above.

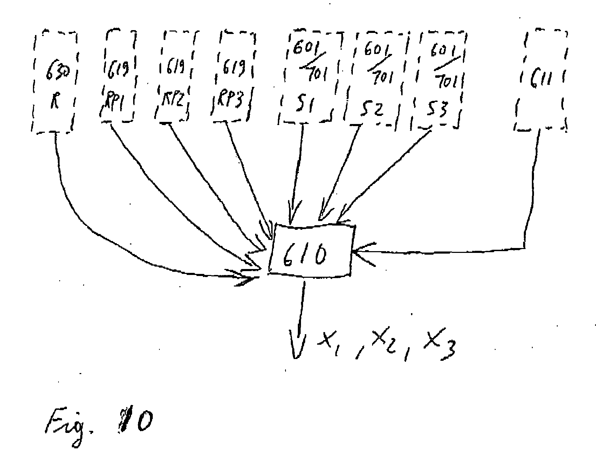

Referring to Fig. 10, a flow diagram illustrates a third embodiment of a method according to the invention for determining the concentration of a plurality - three - of component gases using the optical absorption gas analyzer. Signal processing as outlined above in signal processing blocks 601 or 701 is performed for each channel, i.e. for each of the signals S1, S2, and S3. The digitized signals are then provided to a processor for determining the concentrations x1, x2, and x3 of the three component gases - box 610. In order to correct for a drift in the emitter intensity and in the detectors and electronic hardware an auto calibration procedure 611 and, optionally, an intensity/temperature correction is implemented- In predetermined time intervals or initiated by an operator the main absorption cell 102 is purged with a non-absorbent gas, for example, nitrogen. The detected signal for each channel 1,2, and 3 is processed using the above processing steps into a digital signal prior provision to the processor for updating a calibration file. Optionally, a primary reference signal is received, for example, individually for each channel RP1, RP2, and RP3 and processed in primary reference block 619 and provided to the processor for correcting a drift in the emitter intensities during measurements. Further optionally, a reference signal R is received and processed in reference block 630 and provided to the processor for correcting a shift in the absorption characteristics of the main absorption cell 102. The signal processing is performed either simultaneously for all channels or, alternatively, the channels are processed successively. Successive signal processing enables use of the same hardware for all channels.

The optical absorption gas analyzer is highly beneficial for the control of heat treating atmospheres ensuring accurate determination of concentrations of component gases. Component gases in heat treating atmospheres are, for example:

Ammonia $NH_3$ ;

Water Vapour $H_2O$;

Carbon Dioxide $CO_2$;

Methane $CH_4$.

In combination with a hydrogen sensor, it is possible to determine directly the potential values necessary to establish the behavior of the heat treating atmosphere with regard to a metallic surface. Depending on the type of heat treatment, the following potentials serve as controlling parameters:

$K_C$ Carburizing Potential;

$K_N$ Nitriding Potential;

$K_O$ Oxidizing Potential.

Table 1 indicates values of potentials to be controlled in case of specific heat or thermochemical treatments:

Table 1

| Treatment | Admitted active components | Components in atmosphere | Potentials to be controlled |
|---|---|---|---|
| Bright annealing | $CO$, $CO_2$, $H_2$ | $N_2$, $H_2$, $H_2O$, $CO$, $CO_2$ | $K_C^B = p_{CO}^2/p_{CO2}$, $K_O = p_{H2O}/p_{H2}$ |
| Carburizing | $CO$, $CO_2$, $CH_4$‡ | $N_2$, $H_2$, $CO$, $CO_2$, $CH_4$ | $K_C^B = p_{CO}^2/p_{CO2}$ |
| Nitriding | $NH_3$, $N_2$ $NH_{3diss}$ | $NH_3$, $N_2$, $H_2$ | $K_N = p_{NH3}/p_{H2}^{1.5}$ |
| Oxynitriding | $NH_3$, air or $H_2O$ | $NH_3$, $N_2$, $H_2$, $H_2O$ | $K_N = p_{NH3}/p_{H2}^{1.5}$, $K_O = p_{H2O}/p_{H2}$ |
| Nitrocarburizing or Carbonittiding | $NH_3$, $N_2$, $CO_2$, $CO$ or others* | $NH_3$, $N_2$, $H_2$, $CO_2$, $CO$, $CH_4$, $HCN$, $H_2O$ | $K_N = p_{NH3}/p_{H2}^{1.5}$, $K_O = p_{H2O}/p_{H2}$, $K_C^W = p_{CO} \cdot p_{H2}/p_{H2O}$‡‡ |
| Post-oxidation | $NH_3$, $N_2$, air or $H_2O$ | $NH_3$, $N_2$, $H_2$, $H_2O$ | $K_O = p_{H2O}/p_{H2}$ |

\* Other carbon-bearing components in a carburizing or nitrocarburizing atmosphere include e.g. hydrocarbons (propane, acetylene) or amines.
‡‡ Carburizing potential as established from the water gas equilibrium. There is also the related potential $K_C^B = P_{CO}^2/P_{CO2}$

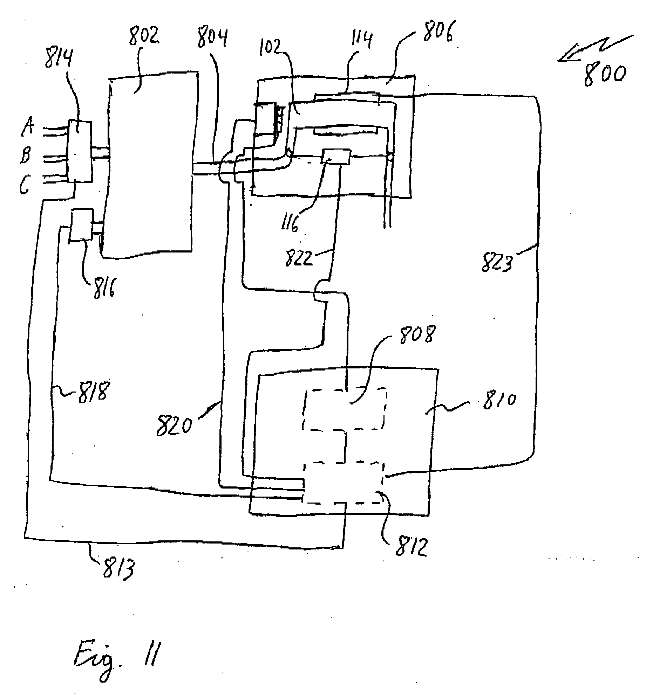

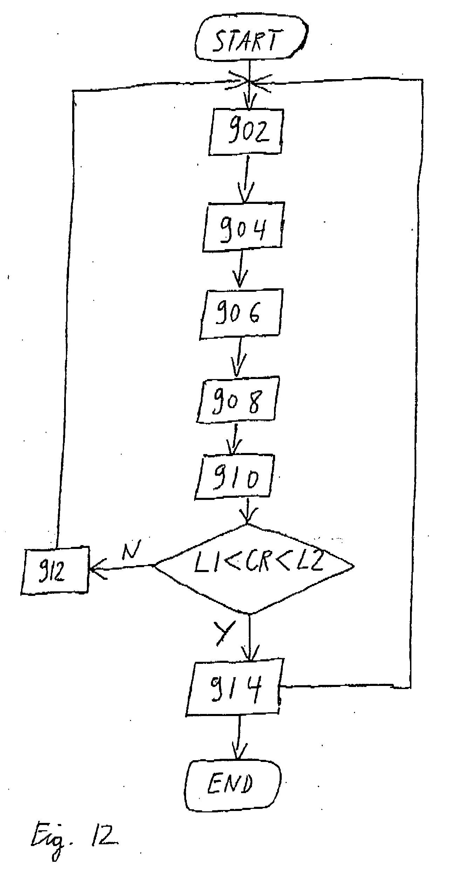

Referring to Figs. 11 and 12, a system 800 and a method according to the invention for providing process control in a heat treating process are shown. While the method and system for providing process control is described in connection with a heat treating process, it will become evident to those in the art that application of same is not limited thereto but is highly beneficial in numerous processes where exact composition of a processing atmosphere is of importance. A heat treating atmosphere is sampled from a heat treating furnace 802 through sample line 804 and provided to the main absorption cell 102 of an optical absorption gas analyzer 806 according to the invention-box 902. After sampling, the pressure and temperature of the sampled atmosphere is adjusted to predetermined values for the following optical measurements - box 904. Depending on the process, the analyzer 806 measures the concentration of one, two, or more component gases set to different selected absorption bands. The measurement signals are processed - box 906 - as illustrated above in processing unit 808 and digitized signals are then provided to a processor 812 of a control system 810 for processing. Alternatively, the measurement signals are converted into digital signals prior processing with the processing performed by the processor 812. The signal processing is performed by the processor 812 by executing executable commands stored in a non-volatile storage medium. Alternatively, the processor 812 comprises electronic circuitry designed for performing at least a portion of the signal processing in a hardware implemented fashion. Upon receipt the processor 812 determines the concentration of the component gases and the potential values of the selected heat treating process - box 908. In a following step the determined potential values are compared with predetermined potential values to produce a comparison result CR for each potential - box 910. In dependence upon the comparison result a gas inflow controller 814 in communication with the processor 812 via control communication link 813 adjusts inflow of individual component gases A, B, C, ...- box 912. The measurement and adjustment procedure is then repeated until the comparison result CR for each potential is within predetermined limits L1 and L2. The measurement/adjustment cycle is then repeated in predetermined time intervals - box 914, initiated by the processor 812 or by an operator. Provision of the sample gas to the main absorption cell 102 and its pressure therein is, for example, controlled by the processor 812 in concert with the pressure control device 116 via control communication link 822. Optionally, a control communication link 823 is provided enabling the processor 812 to control the main absorption cell temperature control device 114. Depending on the component gases to be controlled, the processor 812 is in communication via communication line 818 with a second other sensor, for example, a hydrogen sensor 816 for measuring a concentration of hydrogen in the heat treating atmosphere and providing a signal in dependence thereupon. Further optionally, the processor 812 is in control communication with the absorption gas analyzer 806 via control communication line 820 for controlling emitter intensities and/or operation of the emitter/detector temperature control device 130.

Numerous other embodiments of the invention will be apparent to persons skilled in the art without departing from the spirit and scope of the invention as defined in the appended claims.

**Claims**

1. An absorption gas analyzer for measuring a concentration of at least a component gas in a sample gas comprising:

   a main absorption cell (102) for containing the sample gas at a predetermined temperature and a predetermined pressure for measurement therein;
   at least an electromagnetic radiation source (108) for providing electromagnetic radiation in at least a predetermined narrow wavelength band, the predetermined narrow wavelength band being within a wavelength range of a predetermined absorption band of each of the at least a component gas, the electromagnetic radiation for being transmitted through the main absorption cell (102);
   a reflecting device (110) disposed for reflecting the electromagnetic radiation after transmission through the main absorption cell (102) such that the electromagnetic radiation is transmitted again therethrough; and,
   at least a detector (112) for detecting the electromagnetic radiation after the second transmission through the main absorption cell (102) and for providing at least an intensity signal in dependence upon the concentration of the at least a component gas, the at least a detector being placed at a predetermined distance from the reflecting device (110) with the predetermined distance including a predetermined defocusing distance (D).

2. An absorption gas analyzer as defined in claim 1 **characterized in that** the at least an electromagnetic radiation source (108) comprises at least a narrow band emitter absent a filter.

3. An absorption gas analyzer as defined in any one of claims 1 and 2 **characterized in that** the at least a narrow band has a bandwidth between 1 nm and 150 nm.

4. An absorption gas analyzer as defined in any one of claims 1 to 3 comprising:

   a reference emitter (409) for emitting a reference electromagnetic radiation in a wavelength band outside absorption bands of the sample gas, the electromagnetic radiation for being transmitted through the main absorption cell (102), reflected at the reflecting device (110), and transmitted again therethrough; and,
   a reference detector (413) for detecting the reference electromagnetic radiation.

5. An absorption gas analyzer as defined in any one of claims 1 to 4 comprising a primary reference detector (428) for detecting a portion of the electromagnetic radiation prior transmission through the main absorption cell (102).

6. An absorption gas analyzer as defined in any one of claims 1 to 5 comprising an interfering gas cell (318) containing an interfering gas comprising an absorption band which is partially overlapping the wavelength band of one of the at least a narrow band emitter, the interfering gas cell being disposed at one of a first location and a second location, the first location being between at least the one of the at least an emitter (108) and the main absorption cell (102), and the second location being between the main absorption cell (102) and the reflecting device (110).

7. An absorption gas analyzer as defined in any one of claims 1 to 6 comprising at least an emitter/detector temperature control device (130) in thermal communication with the at least an emitter (108) and the at least a detector (112).

8. An absorption gas analyzer as defined in any one of claims 1 to 7 comprising a main absorption cell temperature control device (114) covering at least a portion of an outside surface of the body of the main absorption cell (102).

9. An absorption gas analyzer as defined in any one of claims 1 to 8 comprising:

   an inlet (104) and an outlet (106) in fluid communication with the main absorption cell (102), the inlet (104) for being in fluid communication with a processing apparatus (802) for receiving a sample gas therefrom; and,
   a control device (116) in communication with at least one of the inlet (104) and the outlet (106).

10. An absorption gas analyzer as defined in claim 9 **characterized in that** the inlet (104) and the outlet (106) are disposed at a first end of the main absorption cell (102).

11. An absorption gas analyzer as defined in claim 10 comprising:

    a conduit (180) disposed inside the main absorption cell (102), the conduit (180) being in fluid communication with the inlet (104) and having at least an opening at a second opposite end of the main absorption cell (102).

**12.** An absorption gas analyzer as defined in any one of claims 9 to 11 comprising a processor (812) in signal communication with the at least a detector (112) for receiving data indicative of the at least an intensity signal for determining a concentration of the at least a component gas in dependence thereupon.

**13.** An absorption gas analyzer as defined in claim 12 comprising a gas inflow control communication link (813) for providing control communication between the processor (812) and a gas inflow controller (814) of the processing apparatus (802).

**14.** An absorption gas analyzer as defined in any one of claims 12 and 13 comprising:

a hydrogen sensor communication link (818) connected to the processor (812) for receiving a hydrogen sensor signal indicative of a concentration of hydrogen in the heat treating atmosphere.

**15.** A method for measuring a concentration of at least a component gas in a sample gas representative of an atmosphere in a processing apparatus (802) comprising:

a) providing in a main absorption cell, (102) the sample gas at a predetermined temperature and a predetermined pressure for measurement therein;
b) transmitting electromagnetic radiation through the main absorption cell (102), the electromagnetic radiation being provided from at least an electromagnetic radiation source in at least a predetermined narrow wavelength band within a wavelength range of a predetermined absorption band of the at least a component gas;
c) reflecting the electromagnetic radiation using a reflecting device (110);
d) transmitting the reflected electromagnetic radiation through the main absorption cell (102); and,
e) detecting the electromagnetic radiation after the second transmission through the main absorption cell (102) at a predetermined distance from the reflecting device (110) with the predetermined distance including a predetermined defocusing distance (D) and providing at least an intensity signal in dependence upon the concentration of the at least a component gas.

**16.** A method for measuring a concentration of at least a component gas as defined in claim 15 comprising:

f) determining a concentration of the at least a component gas in dependence upon the at least an intensity signal.

**17.** A method for measuring a concentration of at least a component gas as defined in claim 16 comprising;

g) determining at least a potential with respect to the at least a component gas based on the determined concentration of the at least a component gas.

**18.** A method for measuring a concentration of at least a component gas as defined in claim 17 comprising:

h) comparing the at least a determined potential with at least a predetermined potential value to produce at least a comparison result and if at least one of the comparison results is not within predetermined limits providing a control signal for adjusting the concentration of the at least one component gas of the atmosphere in the processing apparatus (802).

**19.** A method for measuring a concentration of at least a component gas as defined in any one of claims 17 and 18 comprising:

receiving a hydrogen sensor signal indicative of a concentration of hydrogen in the atmosphere for determining a potential of at least a component gas.

**20.** A method for measuring a concentration of at least a component gas as defined in any one of claims 15 to 19 comprising:

determining at least a transfer function for use in determining the concentration of at least a component gas.

**21.** A method for measuring a concentration of at least a component gas as defined in any one of claims 15 to 20 comprising:

providing non absorbent gas in the main absorption cell (102);

performing b) to d);

detecting the electromagnetic radiation after the second transmission through the main absorption cell (102) and providing at least a calibration intensity signal for correcting subsequent concentration measurements in dependence thereupon.

22. A method for measuring a concentration of at least a component gas as defined in anyone of claims 15 to 21 comprising:

transmitting electromagnetic radiation of one of the at least a predetermined narrow wavelength band through an interfering gas cell (318) containing an interfering gas comprising an absorption band which is partially overlapping the one wavelength band; emitting interfering gas reference electromagnetic radiation in a wavelength band outside absorption bands of the sample gas through the main absorption cell (102);

detecting the interfering gas reference electromagnetic radiation after passing through the main absorption cell (102) and providing an interfering gas reference intensity signal in dependence thereupon; and,

determining the concentration of the component gas corresponding to the one wavelength band in dependence upon the corresponding intensity signal and the interfering gas reference intensity signal.

Fig. 1a

Fig. 16

*Fig. 2*

Fig. 3a

200

102

132

322

320

112

108

130

110

318, 319

Fig. 36

Fig. 4

**Fig. 5a**

Fig. 56

Fig. 5c

Fig. 5d

Fig. 5e

586    582

580    584    102

588

Fig 6

Fig. 7a

Fig. 7b

Fig. 8

Fig. 9

Fig. 10

EP 1 724 567 A1

Fig. 11

29

Fig. 12

**European Patent Office**

**EUROPEAN SEARCH REPORT**

Application Number

EP 06 00 9924

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 195 450 A (L'AIR LIQUIDE, S.A. A DIRECTOIRE ET CONSEIL DE SURVEILLANCE POUR L'ETU) 10 April 2002 (2002-04-10)<br>* paragraphs [0013] - [0027] *<br>* paragraph [0032] - paragraph [0054]; figures 1,3 *<br>----- | 1-22 | INV.<br>G01N21/35<br>G01N21/61<br>C23C8/06 |
| X | US 6 084 668 A (MCANDREW ET AL) 4 July 2000 (2000-07-04)<br>* column 2, line 24 - column 6, line 27; figure 2 *<br>* column 9, line 33 - line 62; figure 8 *<br>----- | 1-22 | |
| A | US 6 353 225 B1 (STRZODA RAINER ET AL) 5 March 2002 (2002-03-05)<br>* column 2, line 55 - column 3, last line ; figures 1-3b *<br>----- | 1-22 | |
| A | PATENT ABSTRACTS OF JAPAN vol. 013, no. 219 (P-875), 23 May 1989 (1989-05-23)<br>& JP 01 035245 A (SHIMADZU CORP), 6 February 1989 (1989-02-06)<br>* abstract *<br>----- | 1-22 | TECHNICAL FIELDS SEARCHED (IPC)<br>G01N<br>C23C |
| A | PATENT ABSTRACTS OF JAPAN vol. 2002, no. 04, 4 August 2002 (2002-08-04)<br>& JP 2001 349830 A (NIPPON SOKEN INC; TOYOTA MOTOR CORP), 21 December 2001 (2001-12-21)<br>Abstract and Figure<br>----- | 1-22 | |

-/--

The present search report has been drawn up for all claims

| Place of search | Date of completion of the search | Examiner |
|---|---|---|
| Munich | 20 July 2006 | Consalvo, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 06 00 9924

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PATENT ABSTRACTS OF JAPAN vol. 2000, no. 23, 10 February 2001 (2001-02-10) -& JP 2001 160554 A (DAINIPPON SCREEN MFG CO LTD), 12 June 2001 (2001-06-12) * abstract; figures 2,3 * ----- | 1-22 | |
| A | PATENT ABSTRACTS OF JAPAN vol. 1998, no. 10, 31 August 1998 (1998-08-31) & JP 10 142154 A (NIPPON SEIKO KK), 29 May 1998 (1998-05-29) * abstract * ----- | 1-22 | |
| A | FR 2 689 976 A (INNOVATIQUE SA) 15 October 1993 (1993-10-15) * claims 1,6-10; figures 1,6 * ----- | 1-22 | |

TECHNICAL FIELDS SEARCHED (IPC)

The present search report has been drawn up for all claims

| Place of search | Date of completion of the search | Examiner |
|---|---|---|
| Munich | 20 July 2006 | Consalvo, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 06 00 9924

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2006

| Patent document cited in search report | | Publication date | Patent family member(s) | | Publication date |
|---|---|---|---|---|---|
| EP 1195450 | A | 10-04-2002 | CN<br>JP<br>TW<br>US | 1345081 A<br>2002184767 A<br>512412 B<br>6442736 B1 | 17-04-2002<br>28-06-2002<br>01-12-2002<br>27-08-2002 |
| US 6084668 | A | 04-07-2000 | AU<br>EP<br>JP<br>TW<br>WO | 7962498 A<br>0995105 A1<br>2001509595 T<br>432210 B<br>9902969 A1 | 08-02-1999<br>26-04-2000<br>24-07-2001<br>01-05-2001<br>21-01-1999 |
| US 6353225 | B1 | 05-03-2002 | DE<br>EP<br>NO | 19717145 A1<br>0874233 A2<br>981768 A | 29-10-1998<br>28-10-1998<br>26-10-1998 |
| JP 01035245 | A | 06-02-1989 | JP | 2734507 B2 | 30-03-1998 |
| JP 2001349830 | A | 21-12-2001 | NONE | | |
| JP 2001160554 | A | 12-06-2001 | NONE | | |
| JP 10142154 | A | 29-05-1998 | NONE | | |
| FR 2689976 | A | 15-10-1993 | NONE | | |

For more details about this annex : see Official Journal of the European Patent Office, No. 12/82

**EP 1 724 567 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 60681492 B
- US 6710347 B, Eden